# EUROPÄISCHE PATENTANMELDUNG

(11) **EP 1 355 210 A1**
(43) Veröffentlichungstag der Anmeldung: **22.10.2003**
(21) Anmeldenummer: 02008607.0
(22) Anmeldetag: 17.04.2002
(51) Int. Cl.: G05B 23/02

(54) **Verfahren und System zur Normierung von Prozessgrössen**

(71) Anmelder: ABB Research Ltd., 8050 Zürich (CH)
(72) Erfinder: Beuthel, Carsten, Dr.-Ing., 69514 Laudenbach (DE); Gölz, Manfred, Dipl.-Ing., 68199 Mannheim (DE)
(74) Vertreter: Miller, Toivo

(57) **Zusammenfassung**

Verfahren und System zur Darstellung von Prozeßgrößen und Prozeßabläufen eines technischen Prozesses, wobei die ermittelten Regelabweichungen aus den im Prozeß vorhandenen Regelkreisen (60) an eine Datenverarbeitungseinrichtung (10) übermittelt werden und für die jeweiligen Regelabweichungen mittels eines zugehörigen Verarbeitungsfunktionsblocks (100) jeweils ein normierter Wert bestimmt wird.

Die normierten Werte werden an eine Einrichtung zur Datendarstellung (40) übermittelt und aus den normierten Werten wird eine Darstellung der Prozeßgrößen und Prozeßabläufe generiert. Die Darstellung der Prozeßgrößen und Prozeßabläufe wird mittels graphischer Symbole auf einer Prozeßbedienstation (20) angezeigt.

## Beschreibung

Die Erfindung betrifft ein Verfahren und ein System zur Datenvorverarbeitung von Prozeßgrößen für die Darstellung von Prozeßzuständen und Prozeßabläufen eines technischen Prozesses beispielsweise in einer Kraftwerksanlage oder in einer chemischen Anlage.

Es ist allgemein bekannt, das die Prozeßgrößen zur Auswertung und Optimierung von Prozeßabläufen nach einer meßtechnischen Erfassung ausgewertet und dargestellt werden.

Für die Darstellungen der Prozeßgrößen und Prozeßabläufe in technischen Anlagen werden grafische Bedienstationen, sogenannte Prozeßbedienstationen, verwendet. Diese zeigen auf ihren Bildschirmen zur Übersicht zumeist schematisierte Darstellungen der Anlagen, sogenannte Rohrleitungs- und Instrumentierungsdiagramme, welche als R&I- Schemas bezeichnet werden. Zahlreiche neue Anzeigemethoden zur Darstellung der Prozeßgrößen, die den Überblick über den Prozeß verbessern sollen, sind hierzu in der Vergangenheit vorgeschlagen worden, wozu beispielsweise das in C. Beuthel, B. Boussoffara, P. Elzer, K. Zinser, A. Tißen, "Advantages of Mass-Data-Displays in Process S & C", herausgegeben von Department of Mechanical Engineering and Department of Aeronautics and Astronaut's, Massachusetts Institute of Technology, Pre-prints of the 6th IFAC/ IFIP/IFORS/IEA Symposium on Analysis, Design and Evaluation of Man-Machine Systems, Cambridge, 1995, S. 439-444, beschriebene Massendatendisplay zählt.

Mit der Darstellung der Prozeßgrößen und Prozeßabläufe auf einem Massendisplay wird auf die Mustererkennungsfähigkeit des Benutzers abgezielt, der innerhalb eines geordneten Musters sehr schnell Unregelmäßigkeiten feststellen kann. Dazu wird ein Prozeßmeßwert, zumeist ein analoger Meßwert, mit einem grafischen Symbol gekoppelt, welches in Abhängigkeit der Prozeßgröße seine Form, Farbe, Größe und Position verändert. Werden alle Gutzustände eines Prozesses auf dieser Anzeige so definiert, daß sich hierbei ein gleichförmiges Muster von beispielsweise Linien ergibt, so ist der Mensch in der Lage Veränderungen sehr schnell zu erkennen. Voraussetzung ist hierbei, daß alle Gutzustände eines Prozesses so beschrieben werden, daß man eine Datenvorverarbeitung der angezeigten Werte vornehmen kann, in deren Abhängigkeit sich die graphischen Symbole verändern. Eine solche Prozeßdatenvorverarbeitung wird im Folgendem als Normierung bezeichnet.

Normierte Prozeßmeßwerte stellen aber auch die Basis für weitere höhere grafische Prozeßvisualisierungsformen dar, die in C. Beuthel, P. Elzer, "Advantages of 3D Displays for S&C of Large Technical Systems", herausgegeben von Annual Conference on Human Decision Making and Manual Control, Kassel/Germany 1997, S. 181-189, beschrieben sind.

Auch die Verwendung der Normierung für mathematische Analysemethoden, zu denen Neuronale Netze oder die Fuzzy-Technologie zählen und in denen eine effiziente Datenvorverarbeitung benötigt wird, ist bekannt.

Um die Abweichung eines Prozeßmeßwertes zu einem Prozeßsollwert zu ermitteln, ist es notwendig den Prozeßsollwert zu kennen. Dieser muß dem Prozeßzustand jeweils angepaßt sein. Sind diese beiden bekannt, kann eine Normierung durchgeführt und ein neuer normierter Wert berechnet werden.

Die Nachteile bisher vorgeschlagener Verfahren und Systeme zur Visualisierung von Prozeßgrößen bestehen darin, daß sie sehr komplex und aufwendig sind. Hierzu werden zumeist Online- Simulatoren verwendet, die eine Vorausberechnung des zu erwartenden Prozeßgeschehens mit der aktuellen Lage des realen Prozesses vergleichen, um hierdurch eine Normierung zu erreichen. Gerade in komplexen Prozessen, in denen diese Darstellungsform verwendet wird, ist die Vorausberechnung des zu erwartenden Prozeßgeschehens sehr aufwendig und mit einem hohen Kostenaufwand verbunden, was sich am Beispiel eines Kraftwerksprozesses auf Grund der vielen verschiedenen Prozeßzustände, wie z. B. dem Anfahren, der Laständerungen oder dem Abfahren verdeutlichen läßt. Zudem gibt es viele verschiedene Schaltungsvarianten um eine Anlage zu betreiben.

Andere bereits eingesetzte Verfahren bilden den Prozeß mit Hilfe eines Expertensystems ab, wozu allerdings ein hoher Einsatz von Wissen über die Anlage erforderlich ist und diese Systeme zudem nur bedingt allgemein anwendbar sind.

Weiterhin gibt es auch Ansätze neuronale Netze zur Normierung der Prozeßmeßwerte einzusetzen, die aber auch, die technische Machbarkeit vorausgesetzt, einen hohen Traineraufwand benötigen bevor alle Gutzustände erlernt sind.

Ausgehend von dem beschriebenen hohen Aufwand für die Normierung der Prozeßmeßwerte in komplexen Prozessen, liegt der Erfindung die Aufgabe zugrunde, ein Verfahren und ein System zur Darstellung von Prozeßgrößen und Prozeßabläufen eines technischen Prozesses mit einem möglichst geringen Aufwand für eine Datenvorverarbeitung bzw. Normierung der Prozeßgrößen anzugeben.

Diese Aufgabe wird durch ein Verfahren zur Darstellung von Prozeßgrößen und Prozeßabläufen eines technischen Prozesses mittels einer Normierung der Prozeßgrößen mit den im Anspruch 1 angegebenen Merkmalen gelöst. Ein System zur Durchführung dieses Verfahrens und vorteilhafte Ausgestaltungen sind in weiteren Ansprüchen angegeben.

Die Erfindung geht davon aus, daß an die Stelle der normierten Prozeßmeßwerte die Regelabweichungen von im Prozeß vorhandenen Regelkreisen verwendet und in einer Massendatendarstellung visualisiert werden.

Regelabweichungen entstehen nur dann, wenn der Prozeß seinen vordefinierten Verlauf so ändert, daß ein Regler eine Abweichung nicht oder nicht sofort ausgleichen kann, was vorzugsweise durch die Begrenzung der Stellgröße erfolgt.

Da die Regelkreise und deren Auslegung im Prozeß bereits existieren, sind die Vorteile der Erfindung darin zu sehen, daß ein wesentlich geringerer Aufwand für die Darstellung der Prozeßgrößen sowie für die Optimierung der Prozeßabläufe des technischen Prozesses besteht. Moderne Anlagen verfügen über eine große Anzahl von Regelkreisen, welche über den gesamten Prozeßverlauf verteilt sind. Damit ist eine ausreichend große Basis für die Anwendung einer Massendatendarstellung gegeben.

Eine weitere Beschreibung der Erfindung erfolgt nachstehend anhand eines Ausführungsbeispieles, das in den Zeichnungsfiguren näher erläutert ist.

Es zeigen:
- **Fig.** 1: eine Massendatendarstellung,
- **Fig.** 2: ein System zur Normierung von Prozeßgrößen,
- **Fig.** 3: einen Normierungsfunktionsblock,
- **Fig.** 4: einen Verfahrensablauf zur Darstellung von Prozeßgrößen und Prozeßabläufen eines technischen Prozesses, und
- **Fig.** 5: eine Massendatendarstellung für einen Kraftwerksprozeß.

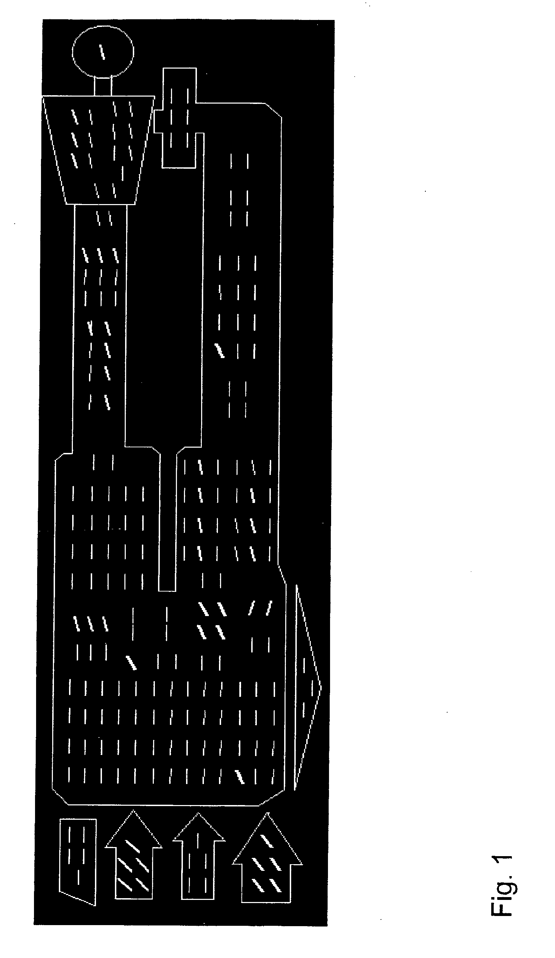

**Fig.** 1 zeigt eine Massendatendarstellung, welche eine positive sowie negative Veränderung der Rotationswinkel und der Dicke der Linien in Abhängigkeit der Abweichung von ihrem vorausberechneten Sollwert aufzeigt. Je größer diese Abweichung ist, um so mehr wird die Linie von der horizontalen in die vertikale Richtung gedreht.

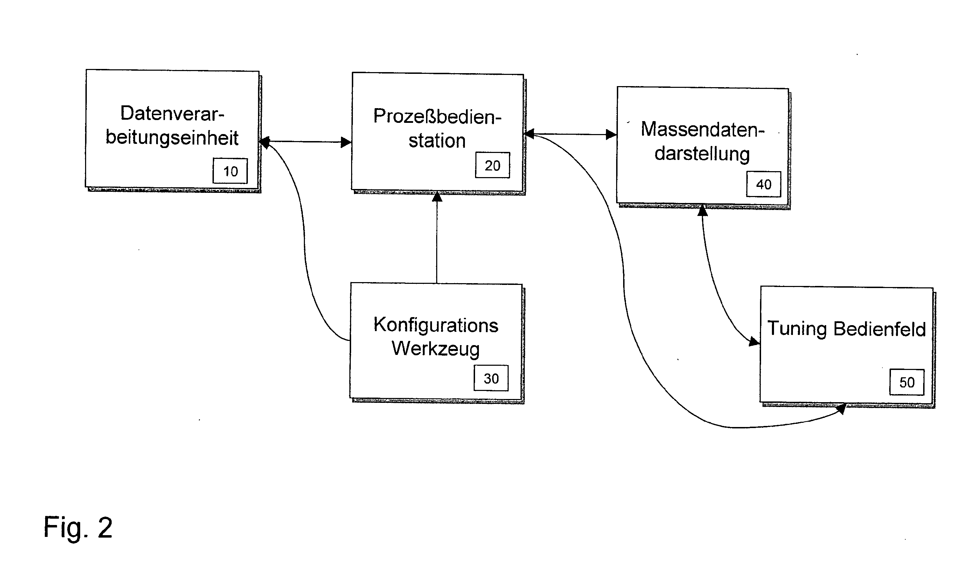

**Fig.** 2 zeigt die Komponenten eines Systems zur Normierung von Prozeßgrößen. Das System besteht aus den folgenden Komponenten:
- einer Datenverarbeitungseinheit 10, die den Prozeß steuert und regelt,
- einer Prozeßbedienstation 20, von welcher aus der Prozeß überwacht und gesteuert wird,
- einem Konfigurationswerkzeug 30, welches der Einrichtung der Prozeßbedienstation 20 und der Konfiguration beispielsweise einer Massendatendarstellung in einer Einrichtung zur Datendarstellung 40 dient, und
- einem Tuning- Bedienfeld 50, welches zur Feinabstimmung der Werte der Massendatenanzeige während des Betriebes genutzt wird.

Die Datenverarbeitungseinrichtung 10 weist einen Normierungs- Funktionsblock auf, der aus den Regelabweichungen der im Prozeß vorhandenen Regelkreise jeweils einen normierten Wert ermittelt und die so normierten Werte der Prozeßbedienstation 20 zuführt.

Aus den normierten Werten wird in der Einrichtung zur Datendarstellung 40 eine Darstellung der Prozeßgrößen und Prozeßabläufe mittels des Konfigurationswerkzeuges 30 generiert und auf der Prozeßbedienstation 20 angezeigt.

Das Tuning- Bedienfeld 50 ist dafür eingerichtet eine Feinabstimmung der normierten Werte auf der Einrichtung zur Datendarstellung 40 und/ oder der Prozeßbedienstation 20 durchzuführen.

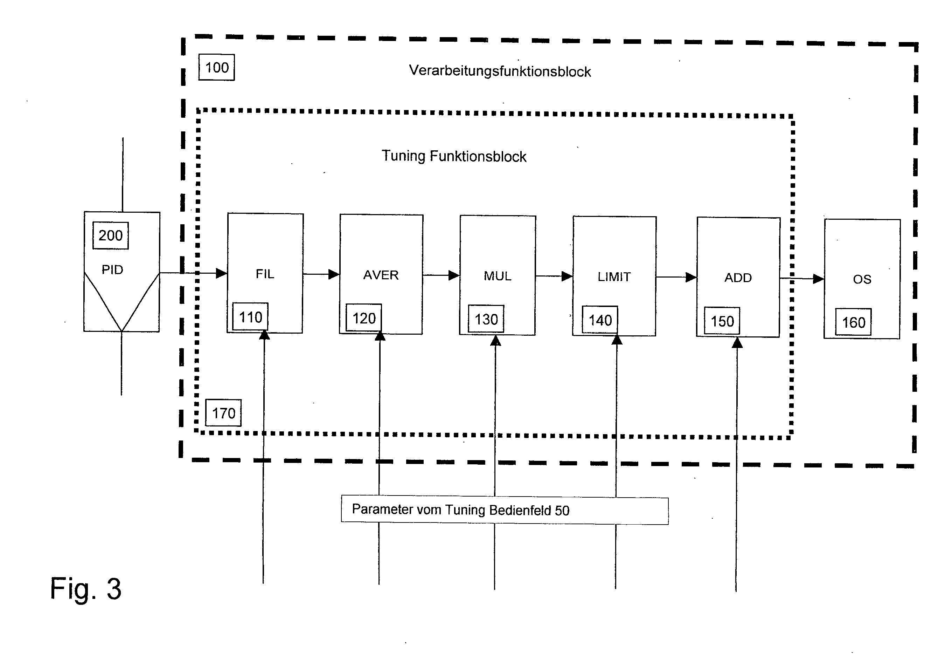

In **Fig.** 3 ist ein Normierungs- Funktionsblock dargestellt, welcher jede einzelne Regelabweichung, die der jeweils zugehörige Prozeßregler 200 zur Verfügung stellt, einen zugehörigen Verarbeitungsfunktionsblock 100 zuführt, welcher aus der Regelabweichung einen Normierungswert ermittelt. Aus den normierten Werten wird eine für den Benutzer und durch die Konfiguration des Systems vorgegebene Darstellungsform generiert.

Mittels von Parametern, welche vom Tuning- Bedienfeld 50 dem Turning- Funktionsblock 170 zugeführt werden, ist die generierte Darstellungsform berechenbar und veränderbar.

Der Verarbeitungsfunktionsblock 100 ist aus einem Tuning- Funktionsblock 170 und einem Ausgabe- Funktionsblock 160 aufgebaut. Der Tuning- Funktionsblock 170 ermittelt auf der Grundlage von voreingestellten Parametern aus der Regelabweichung den Normierungswert und gibt diesen an den Ausgabefunktionsblock 160 weiter.

Der Tuning- Funktionsblock 170 weist dazu eine Reihe von miteinander verketteten Einzelblöcken auf. Diese Einzelblöcke sind beispielsweise:
- ein Eingabefilter 110, welches beispielsweise das Rauschen unterdrückt,
- ein Mittelwertsbilder 120, welcher aus mehreren Eingabewerten einen Mittelwert bildet,
- ein Multiplizierer 130, welcher durch Multiplikation eine Verstärkung des Eingangssignals herbeiführt,
- ein Grenzwert- Funktionsblock 140, welcher vorgegebene Grenzen überwacht und gegebenenfalls den Ausgabewert auf eine feste Schwelle begrenzt, sowie
- ein Addierer 150, welcher einen festen oder variablen Wert zum Eingangssignal hinzuaddiert.

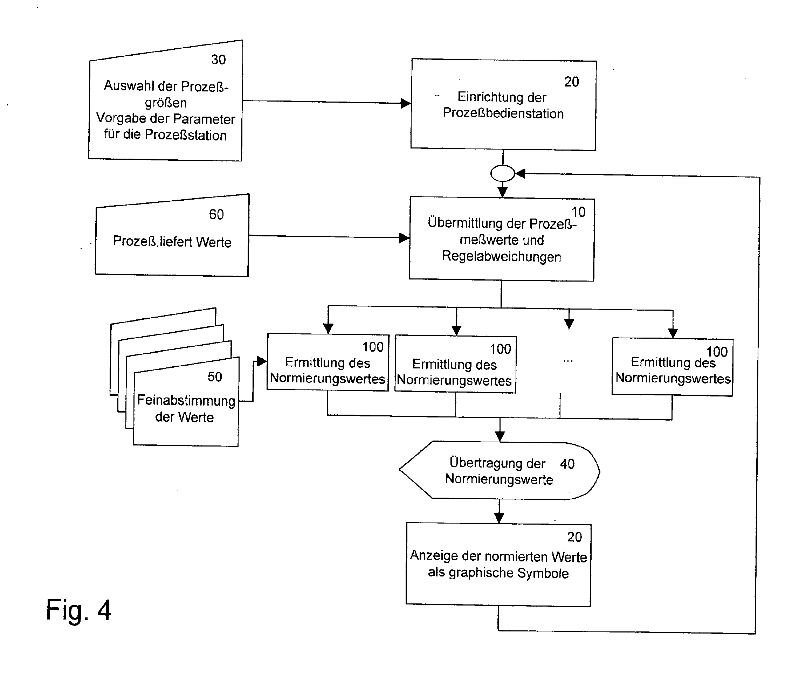

**Fig.** 4 zeigt den Verfahrensablauf zur Darstellung von Prozeßgrößen und Prozeßabläufen eines technischen Prozesses mittels der Normierung der Prozeßgrößen.

Über das Konfigurationswerkzeug 30 werden die darzustellenden Prozeßgrößen ausgewählt und spezifische Parameter für die Einrichtung der Prozeßbedienstation 20 vorgegeben.

Aus den im Prozeß vorhandenen Regelkreisen 60, beispielsweise PID- Reglern, werden die ermittelten Regelabweichungen wie alle anderen Prozeßmeßwerte an die Datenverarbeitungseinrichtung 10 übertragen.

In der Datenverarbeitungseinrichtung 10 ist für jede einzelne Regelabweichung ein zugehöriger Verarbeitungsfunktionsblock 100 ausgeführt, welcher aus der Regelabweichung einen Normierungswert ermittelt.

Dazu wird der Verarbeitungsfunktionsblock 100 individuell für den jeweiligen Normierungswert konfiguriert.

Die Normierungswerte werden daraufhin an eine Einrichtung zur Datendarstellung 40, die vorzugsweise eine Massendatendarstellung ist, gesendet, welche die aus den Regelabweichungen ermittelten normierten Werte der Prozeßgrößen und Prozeßabläufe eines technischen Prozesses als veränderbare graphische Symbole auf der Prozeßbedienstation 20 anzeigt.

Dazu generiert die Prozeßbedienstation 20 aus den normierten Werten eine für den Benutzer und durch die Konfiguration des Systems vorgegebene Darstellungsform, beispielsweise die Massendatendarstellung. Mittels des Tuning- Bedienfeld 50 ist die generierte Darstellungsform berechenbar und veränderbar.

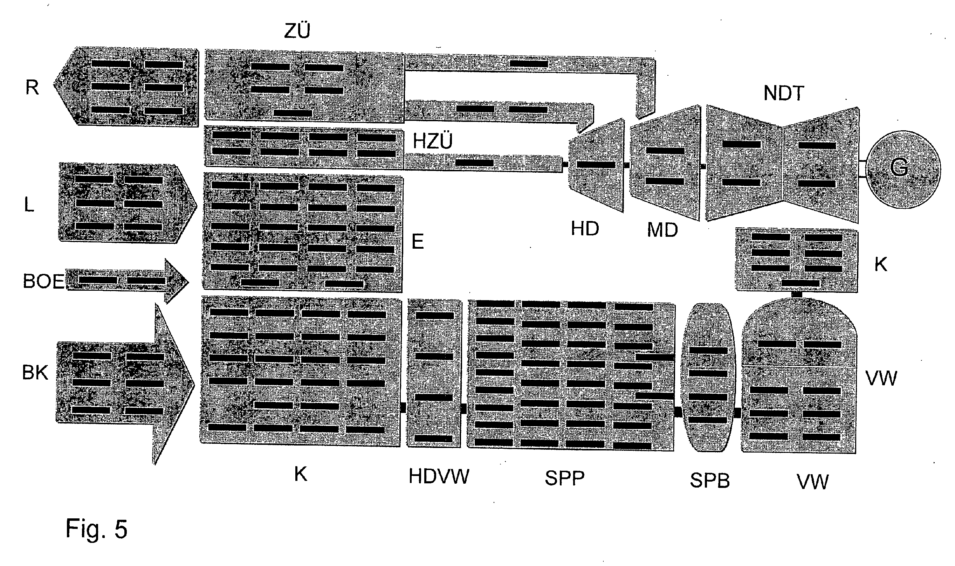

**Fig.** 5 zeigt eine Massendatendarstellung für einen Kraftwerksprozeß mit einer schematischen Darstellung eines Wasser- Dampf Kreislaufes, welcher in einem konventionellen Kohlekraftwerk genutzt wird. Die einzelnen Einheiten kennzeichnen hierbei Prozeßgruppen bzw. Hauptaggregate, die Striche stellen die normierten Prozeßregelabweichungen dar. In der oberen rechten Ecke befindet sich der Generator G. Die Einheiten links daneben stellen die Turbinen dar, gestaffelt von rechts nach links als Niederdruck-, Mitteldruck- und Hochdruckturbine NDT, MDT, HDT. Unterhalb der schematischen Niederdruckturbine NDT befindet sich die Einheit mit den Kondensatormeßwerten K. Darunter schließt sich in der unteren rechten Ecke die Speisewasservorwärmung VW an. Links von dieser befindet sich zuerst der Speisewasserbehälter SPWB, links neben diesem die Speisewasserpumpenmeßwerte SPWP. Diesen folgen die Meßwerte der Hochdruckvorwärmung HDVW um dann weiter links in den Bereich des Kessels K und des Economisers E überzugehen. Die vier Pfeile am linken Rand symbolisieren von unten nach oben die Brennstoffzufuhr "Kohle" BK, die Brennstoffzufuhr "Öl" BOE, die Verbrennungsluftzufuhr L und die Rauchgasabfuhr R an der oberen linken Seite. Der Kesselbereich gliedert sich zudem in einen Verdampferbereich sowie einem Überhitzer- und Zwischenüberhitzerbereich HZÜ, ZÜ. Zwischen dem Überhitzer HZÜ und der Hochdruckturbine HDT sowie zwischen der Hochdruckturbine HDT, dem Zwischenüberhitzer ZÜ und der Mitteldruckturbine MDT sind Verbindungen dargestellt, um die hierdurch geleiteten Flüsse darzustellen.

## Patentansprüche

1. Verfahren zur Darstellung von Prozeßgrößen und Prozeßabläufen eines technischen Prozesses, wobei
- die ermittelten Regelabweichungen aus den im Prozeß vorhandenen Regelkreisen (60) an eine Datenverarbeitungseinrichtung (10) übermittelt werden,
- für die jeweiligen Regelabweichungen mittels eines zugehörigen Verarbeitungsfunktionsblocks (100) jeweils ein normierter Wert bestimmt wird,
- die normierten Werte an eine Einrichtung zur Datendarstellung (40) übermittelt werden,
- aus den normierten Werten eine Darstellung der Prozeßgrößen und Prozeßabläufe generiert wird, und
- die Darstellung der Prozeßgrößen und Prozeßabläufe als graphische Symbole auf einer Prozeßbedienstation (20) angezeigt werden.

2. Verfahren nach Anspruch 1, **dadurch gekennzeichnet, daß** der Verarbeitungsfunktionsblock (100) für den jeweiligen normierten Wert individuell konfiguriert wird.

3. Verfahren nach Anspruch 1 oder 2, **dadurch gekennzeichnet, daß** mittels eines Konfigurationswerkzeuges (30) die darzustellenden Prozeßgrößen und Prozeßabläufe ausgewählt werden und aus den jeweiligen normierten Werten eine Darstellung der Prozeßgrößen und des Prozeßablaufes generiert wird.

4. Verfahren nach einem der vorherigen Ansprüche, **dadurch gekennzeichnet, daß** eine Feinabstimmung der Anzeige der Prozeßgrößen und des Prozeßablaufes mittels eines Tuning- Bedienfeldes (50) durchgeführt wird.

5. System zur Darstellung von Prozeßgrößen und Prozeßabläufen eines technischen Prozesses, das eine Datenverarbeitungseinrichtung (10), eine Prozeßbedienstation (20), ein Konfigurationswerkzeug (30), eine Einrichtung zur Datendarstellung (40) und ein Tuning- Bedienfeld (50) aufweist, wobei
a) die Datenverarbeitungseinrichtung (10) einen Normierungs- Funktionsblock aufweist, der dafür eingerichtet ist, aus den Regelabweichungen der im Prozeß vorhandenen Regelkreise (60) jeweils einen normierten Wert zu ermitteln und die so normierten Werte der Prozeßbedienstation (20) zuzuführen,
b) die Prozeßbedienstation (20) dafür eingerichtet ist, aus den normierten Werten mittels des Konfigurationswerkzeuges (30) eine Darstellung (40) der Prozeßgrößen und Prozeßabläufe auf der Einrichtung zur Datendarstellung (40) zu generieren, und
c) das Tuning- Bedienfeld (50), dafür eingerichtet ist, eine Feinabstimmung der normierten Werte auf der Einrichtung zur Datendarstellung (40) und/ oder der Prozeßbedienstation (20) durchzuführen.

6. System nach Anspruch 5, **dadurch gekennzeichnet, daß** der Normierungs- Funktionsblock für die von einem Prozeßregler (200) jeweils bereitgestellte Regelabweichung einem jeweils zugeordneten Verarbeitungsfunktionsblock (100) aufweist.

7. System nach Anspruch 5 oder 6, **dadurch gekennzeichnet, daß** der Verarbeitungsfunktionsblock (100) einen Tuning- Funktionsblock (170) aufweist, der dafür eingerichtet ist, aus der jeweiligen Regelabweichung einen Normierungswert zu ermitteln und über einem Ausgabe- Funktionsblock (160) der Einrichtung zur Datendarstellung (40) zuzuführen.

8. System nach einem der Ansprüche 5 bis 7, **dadurch gekennzeichnet, daß** der Tuning- Funktionsblock (170) einen Eingabefilter (110), einen Mittelwertsbilder (120), einen Multiplizierer (130), einen Begrenzer (140) und/ oder einen Addierer (150) aufweist.

9. System nach einem der Ansprüche 5 bis 8, **dadurch gekennzeichnet, daß** das Konfigurationswerkzeug (30) spezifische Parameter zur Auswahl und zur Darstellung der Prozeßgrößen aufweist und dafür eingerichtet ist, die Prozeßbedienstation (20) zu konfigurieren.

10. System und Verfahren nach einem der vorherigen Ansprüche, **dadurch gekennzeichnet, daß** die Einrichtung zur Datendarstellung (40) eine Massendatendarstellung ist.
